# EUROPEAN PATENT APPLICATION

(11) **EP 4 440 091 A1**
(43) Date of publication of application: **02.10.2024**
(21) Application number: 22897685.8
(22) Date of filing: 17.11.2022
(51) Int. Cl.: H04M 3/436, H04M 1/72484, H04M 1/72403, H04M 1/66

(54) **INCOMING CALL REMINDING METHOD AND ELECTRONIC DEVICE**

(30) Priority: 23.11.2021 CN 202111392770
(71) Applicant: Vivo Mobile Communication Co., Ltd., Dongguan, Guangdong 523863 (CN)
(72) Inventor: LIU, Jitai, Dongguan, Guangdong 523863 (CN)
(74) Representative: Conti, Marco
(86) International application number: PCT/CN2022/132493
(87) International publication number: WO 2023/093602

(57) **Abstract**

This application pertains to the field of electronic technologies, and discloses an incoming call notification method and an electronic device. The incoming call notification method includes: obtaining, when calling party information corresponding to an incoming call request does not exist in a preset contact list, a multimedia notification file based on label information corresponding to the calling party information; and playing the multimedia notification file on a display screen.

## Description

### CROSS-REFERENCE TO RELATED APPLICATIONS

This application claims priority to Chinese Patent Application No. 202111392770.1, filed on November 23, 2021 and entitled "INCOMING CALL NOTIFICATION METHOD AND ELECTRONIC DEVICE", which is incorporated herein by reference in its entirety.

### TECHNICAL FIELD

This application pertains to the field of communication technologies, and specifically, to an incoming call notification method and an electronic device.

### BACKGROUND

As the scientific and technological level increasingly advances, a degree of intelligence of smartphones is getting higher. While the smartphones benefit the public through powerful functions, criminals also perform illegal activities such as telecommunication fraud by using the smartphones.

Although the current smartphones present a label information notification to notify a user of an attribute of an incoming call, an existing incoming call notification function still easily causes the user to be deceived on a fraud call, or makes the user miss a call without knowing the call. Therefore, an incoming call notification currently cannot play a sufficient warning role.

### SUMMARY

An objective of embodiments of this application is to provide an incoming call notification method and an electronic device, so that a problem that an existing incoming call notification function easily causes a user to be deceived on a fraud call, or makes a user miss a call without knowing the call can be resolved.

According to a first aspect, an embodiment of this application provides an incoming call notification method, applied to a called party, where the method includes:
obtaining, when calling party information corresponding to an incoming call request does not exist in a preset contact list, a multimedia notification file based on label information corresponding to the calling party information; and
playing the multimedia notification file on a display screen.

According to a second aspect, an embodiment of this application provides an incoming call notification apparatus, applied to a called party, where the incoming call notification apparatus includes:
an obtaining module, configured to obtain, when calling party information corresponding to an incoming call request does not exist in a preset contact list, a multimedia notification file based on label information corresponding to the calling party information; and
a play module, configured to play the multimedia notification file on a display screen.

According to a third aspect, an embodiment of this application provides an electronic device. The electronic device includes a processor and a memory. The processor stores a program or instructions capable of running on the processor. When the program or the instructions are executed by the processor, the steps of the method according to the first aspect are implemented.

According to a fourth aspect, an embodiment of this application provides a readable storage medium. The readable storage medium stores a program or instructions. When the program or the instructions are executed by a processor, the steps of the method according to the first aspect are implemented.

According to a fifth aspect, an embodiment of this application provides a chip. The chip includes a processor and a communications interface, the communications interface is coupled to the processor, and the processor is configured to run a program or instructions to implement the method according to the first aspect.

According to a sixth aspect, an embodiment of this application provides a computer program product. The program product is stored in a storage medium, and the program product is executed by at least one processor to implement the method in the first aspect.

In the embodiments of this application, the user is notified of a strange incoming call by playing a multimedia notification file (for example, a video color ring back tone) based on the label information of a calling party, so that the user can better learn an attribute of the incoming call, thereby enhancing notification conspicuity of the strange incoming call, improving a notification degree of an incoming call notification to the user, and improving call answering safety.

### BRIEF DESCRIPTION OF DRAWINGS

FIG. 1 is a schematic flowchart 1 of an incoming call notification method according to this application;
FIG. 2 is a schematic flowchart 2 of an incoming call notification method according to this application;
FIG. 3 is a schematic flowchart 3 of an incoming call notification method according to this application;
FIG. 4 is a schematic diagram of playing a first multimedia notification file in a first display area on a display screen and displaying a call rejection icon in a second display area according to this application;
FIG. 5 is a schematic flowchart 4 of an incoming call notification method according to this application;
FIG. 6 is a schematic flowchart 5 of an incoming call notification method according to this application;
FIG. 7 is a schematic flowchart 6 of an incoming call notification method according to this application;
FIG. 8 is a schematic flowchart 7 of an incoming call notification method according to this application;
FIG. 9 is a schematic flowchart 8 of an incoming call notification method according to this application;
FIG. 10 is a schematic flowchart 9 of an incoming call notification method according to this application;
FIG. 11 is a schematic flowchart 10 of an incoming call notification method according to this application;
FIG. 12 is a schematic flowchart 11 of an incoming call notification method according to this application;
FIG. 13 is a schematic flowchart 12 of an incoming call notification method according to this application;
FIG. 14 is a schematic flowchart 13 of an incoming call notification method according to this application;
FIG. 15 is a schematic flowchart 14 of an incoming call notification method according to this application;
FIG. 16 is a schematic diagram of a structure of an incoming call notification apparatus according to this application;
FIG. 17 is a schematic diagram 1 of a structure of an electronic device according to this application; and
FIG. 18 is a schematic diagram 2 of a structure of an electronic device according to this application.

### DESCRIPTION OF EMBODIMENTS

The following clearly describes technical solutions in the embodiments of this application with reference to accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

In the specification and claims of this application, the terms "first", "second", and the like are intended to distinguish between similar objects, but do not describe a specific order or sequence. It should be understood that data used in such a way are interchangeable in proper circumstances, so that the embodiments of this application can be implemented in an order other than the order illustrated or described herein. Objects classified by "first", "second", and the like are usually of a same type, and the number of objects is not limited. For example, there may be one or more first objects. In addition, in this specification and the claims, "and/or" represents at least one of connected objects, and a character "/" generally represents an "or" relationship between associated objects.

With reference to the accompanying drawing 1, the incoming call notification method provided in this embodiment of this application is described in detail by using a specific embodiment and an application scenario of the embodiment.

Step 100: Obtain, when calling party information corresponding to an incoming call request does not exist in a preset contact list, a multimedia notification file based on label information corresponding to the calling party information.

A calling party initiates a phone call, and a called party receives the call from the calling party. The called party and the calling party may be various common terminal devices, respectively, such as smartphones, tablet computers, wearable smart devices, or personal computers.

The called party responds to the call from the calling party. When the calling party information corresponding to the incoming call request does not exist in the preset contact list, the called party obtains the multimedia notification file based on the label information corresponding to the calling party information. Specifically, the called party can obtain the calling party information through an IMS (IP Multimedia Subsystem, IP multimedia subsystem) procedure, or obtain the calling party information by recognizing a text on an incoming call screen.

The calling party information includes at least a phone number of the calling party. For example, the calling party information includes a phone number: 12345678910.

It can be understood that, after the called party remarks contact information of a calling party user, when the called party receives a call from the calling party, in addition to displaying the phone number of the calling party on the called party, the remarked contact information on the calling party is also displayed on a screen of the called party. For example, when an incoming call is made, the called party displays the phone number: 12345678910; and remarked information: Chen Sheng. It can be learned based on the remarked information that the contact Chen Sheng makes the call.

There are a plurality of manners in which the called party determines whether the calling party information corresponding to the incoming call request exists in the preset contact list. For example, the called party can search a local address book for the obtained number of the calling party. If the phone number of the calling party does not exist in the address book of the called party, it indicates that the calling party information is strange information. Alternatively, when the calling party information does not include the remarked information, it indicates that the calling party is not labeled by the called party, and it also indicates that the calling party information is strange information.

When the calling party information corresponding to the incoming call request does not exist in the preset contact list, the called party obtains the multimedia notification file based on the label information corresponding to the calling party information.

The label information is brought by a call request and is maintained by a call server. The label information in the call server can be set based on feedbacks from a plurality of terminal devices (including the called party or another device). For example, when a phone number is labeled a fraud call by a plurality of terminal devices, the call server saves a label of the fraud call for the phone number. When the called party is called by using the phone number, a label displayed on an incoming call display screen of the called party is a fraud call. For another example, when a phone number is labeled a take-out call by a plurality of terminal devices, the call server saves a label of the take-out call for the phone number. When the called party is called by using the phone number of a take-out deliverer, a label displayed on an incoming call display screen of the called party is a take-out.

The label information can be obtained in the following manner: When the calling party makes a call, the called party obtains label information corresponding to the calling party from the call server. Alternatively, when the calling party makes a call, the called party performs text recognition on the incoming call screen, recognizes an image of the calling party on the incoming call screen as a text, and extracts the label information from the text obtained through recognition. Specifically, text recognition can be performed by using various text recognition methods. For example, an OCR (Optical Character Recognition, optical character recognition) method can be used to perform text recognition from the incoming call screen, to recognize the label information in the calling party information.

Step 200: Play the multimedia notification file on a display screen.

It should be noted that, in this implementation, a recognition result of each piece of label information corresponds to a multimedia notification file of the label information. The called party obtains the label information corresponding to the calling party information, obtains the multimedia notification file based on the label information corresponding to the calling party information, and plays the multimedia notification file on the display screen. The multimedia notification file includes a video color ring back tone or a speech color ring back tone. In this embodiment, the video color ring back tone is preferably used as the multimedia notification file.

In this embodiment of this application, the user is notified of a strange incoming call by playing a multimedia notification file (for example, a video color ring back tone) based on the label information of a calling party, so that the user can better learn an attribute of the incoming call, thereby enhancing notification conspicuity of the strange incoming call, improving a notification degree of an incoming call notification to the user, and improving call answering safety.

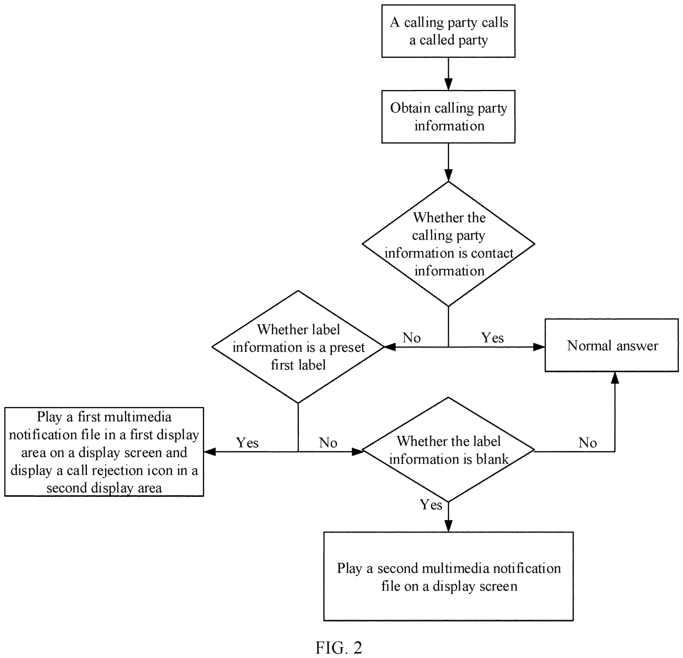

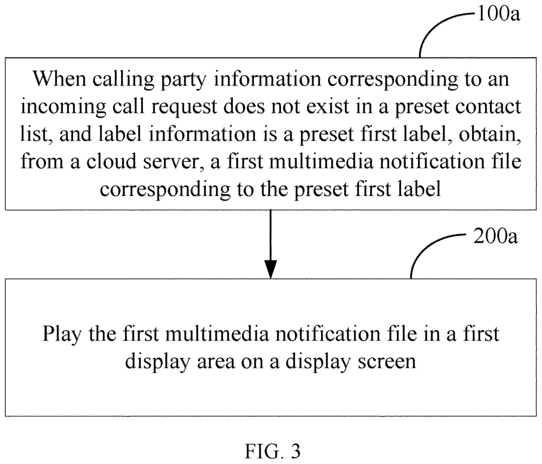

In a feasible embodiment, as shown in FIG. 2 and FIG. 3, the step 100 of obtaining, when calling party information corresponding to an incoming call request does not exist in a preset contact list, a multimedia notification file based on label information corresponding to the calling party information includes the following step:
Step 100a: When the calling party information corresponding to the incoming call request does not exist in the preset contact list, and the label information is a preset first label, obtain, from a cloud server, a first multimedia notification file corresponding to the preset first label.

The preset first label may be label information such as a fraud label, an extortion label, or an intimidation label that endangers life and property safety of the user. When the calling party information corresponding to the incoming call request does not exist in the preset contact list, and the label information is the preset first label, it indicates that an incoming call currently received by the called party is an incoming call that is labeled with a label such as a fraud label, an extortion label, or an intimidation label that endangers life and property safety of the user. In this case, the user needs to be notified by using a video color ring back tone to answer the call carefully, to avoid being deceived.

An example in which the preset first label is a fraud label is used. Specifically, the called party obtains, from the cloud server, a first multimedia notification file corresponding to the fraud label. The first multimedia notification file is preferably a video color ring back tone. The cloud server may be a server maintained by a relevant agency responsible for preventing fraud. The fraud prevention agency can update a fraud prevention notification video on the cloud server in real time, so that the called party receives a latest fraud prevention video from the cloud server. In this case, the user is provided with the latest fraud prevention video, to prevent more people from being deceived in a telecommunications means.

When the first multimedia notification file corresponding to the fraud label is obtained from the cloud server, the step 200 of playing the multimedia notification file on a display screen includes the following step:
Step 200a: Play the first multimedia notification file in a first display area on the display screen.

After receiving the first multimedia notification file (that is, the video color ring back tone) sent by the cloud server, the called party plays the first multimedia notification file in the first display area on the display screen. The first display area may be each area on the display screen, such as an upper half screen or a lower half screen on the display screen.

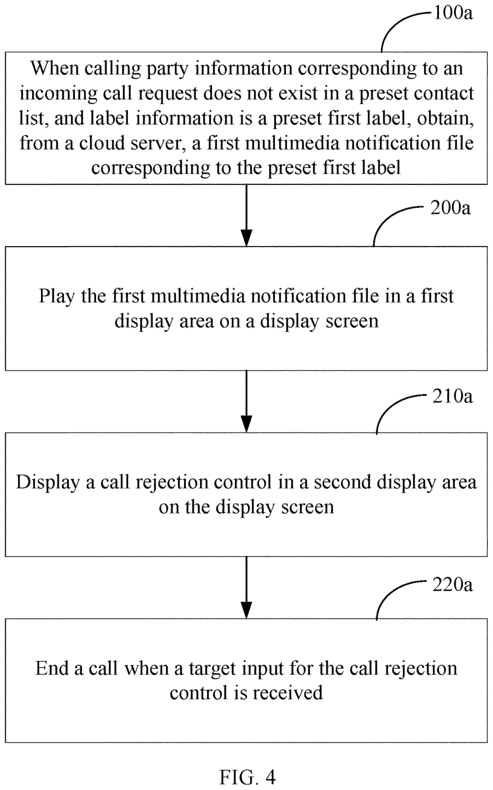

As shown in FIG. 4, after the step 200a of playing the first multimedia notification file in a first display area on the display screen, the method further includes the following steps:
Step 210a: Display a call rejection control in a second display area on the display screen.
Step 220a: Ending a call when a target input for the call rejection control is received.

Specifically, the call rejection control may be a call rejection icon, a call rejection link, or the like. The target input may be a selection operation of the user on the call reject icon, for example, clicking the call reject icon manually or with a stylus on the display screen. An example in which the call rejection control is a call rejection label is used. When the label information is the fraud label, the called party may play the first multimedia notification file (that is, the fraud prevention video) on the current upper half of the screen, and the called party can display the call rejection icon on the lower half of the display screen. The call is ended when the click operation on the call rejection control is received. Therefore, when the user answers an incoming call with the fraud label, the first multimedia notification file extracted from the cloud server is displayed on the called party. The user sees the first multimedia notification file for fraud prevention, and is warned by the first multimedia notification file to hang up in time, to enhance conspicuity and warning of a call notification. In this case, life and property safety of the user is ensured.

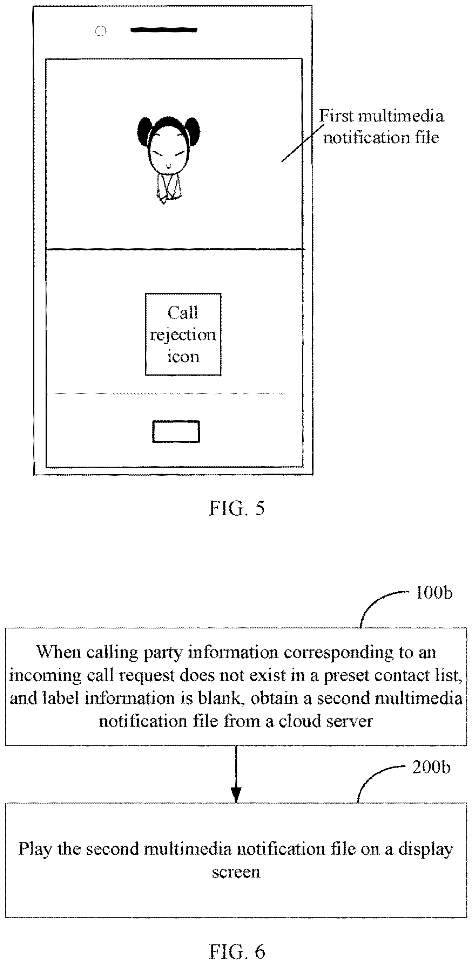

To increase attention of the user to the call reject icon, and notify the user to cut off in time the call currently showed with the fraud label. The call rejection icon is displayed in any one or a combination of the following: brightness enhanced display, flashing display, and breathing light display. For example, as shown in FIG. 5, it may be set that the video color ring back tone for fraud prevention is played on the upper half of the display screen, and the call rejection label is displayed on the lower half of the display screen through brightness enhanced display, to notify the user to reject the fraud call. Alternatively, the call rejection label may be displayed on the lower half of the display screen through brightness enhanced display and flashing display.

In some other feasible embodiments, as shown in FIG. 6, the step 100 of obtaining, when calling party information corresponding to an incoming call request does not exist in a preset contact list, a multimedia notification file based on label information corresponding to the calling party information includes the following step:
Step 100b: When the calling party information corresponding to the incoming call request does not exist in the preset contact list, and the label information is blank, obtain a second multimedia notification file from a cloud server.

When the calling party information corresponding to the incoming call request does not exist in the preset contact list and the label information is blank, it indicates that the incoming call is from a stranger who is not labeled. The user needs to be more alert to fraud or a privacy leak. Therefore, the called party obtains the second multimedia notification file from the cloud server, to display the second multimedia notification file on the display screen of the called party, to perform a notification of a strange incoming call and to be more alert to fraud or a privacy leak.

It should be noted that the second multimedia notification file in this embodiment may have video color ring back tone content the same as or different from the first multimedia notification file.

The step 200 of playing the multimedia notification file on a display screen of the called party includes:
Step 200b: Play the second multimedia notification file on the display screen.

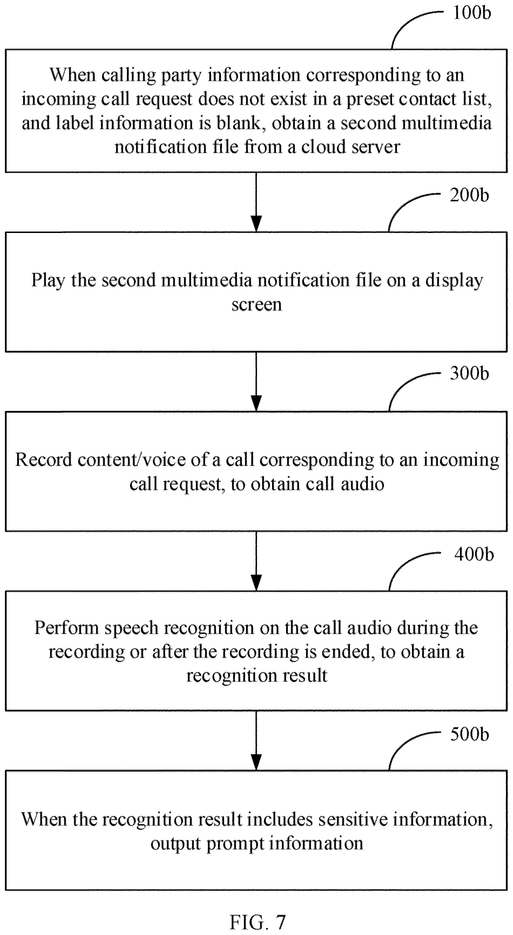

In some other feasible embodiments, as shown in FIG. 7, the incoming call notification method in this embodiment of this application further includes:
Step 300b: Record content/voice of a call corresponding to the incoming call request, to obtain call audio.

After the user answers an incoming call whose label information is blank, the incoming call is from a stranger who is not labeled, and therefore, special attention is required. After the user answers the call, the called party automatically enables a recording function to record content/voice of the call corresponding to the incoming call request, to obtain the call audio.

Step 400b: Perform speech recognition on the call audio during the recording or after the recording is ended, to obtain a recognition result.

Step 500b: When the recognition result includes sensitive information, output prompt information.

In an embodiment, as shown in FIG. 7, the called party performs speech recognition on the call audio after the recording is ended, to obtain the recognition result. When the recognition result includes the sensitive information, the prompt information is outputted to notify the user to be alert to fraud or an information leak. The sensitive information may include information related to property safety of the user, such as a bank card number and a password, and account numbers and passwords of various financial platforms, for example, an online payment password.

In addition, the prompt information may be text, voice, or video prompt information. For example, when recognizing that the call audio includes the sensitive information such as a bank card account number or a password, the called party sends a speech prompt of "The call is related to sensitive information. Please be alert to account safety." Alternatively, a bold text "The call is related to sensitive information. Please be alert to account safety." is displayed on the display screen. Alternatively, a video "The call is related to sensitive information. Please hang up in time." is displayed on the display screen. Therefore, after the recording is ended, when the call audio includes the sensitive information, the user is notified in time, thereby effectively reducing a risk of damage to property safety of the user.

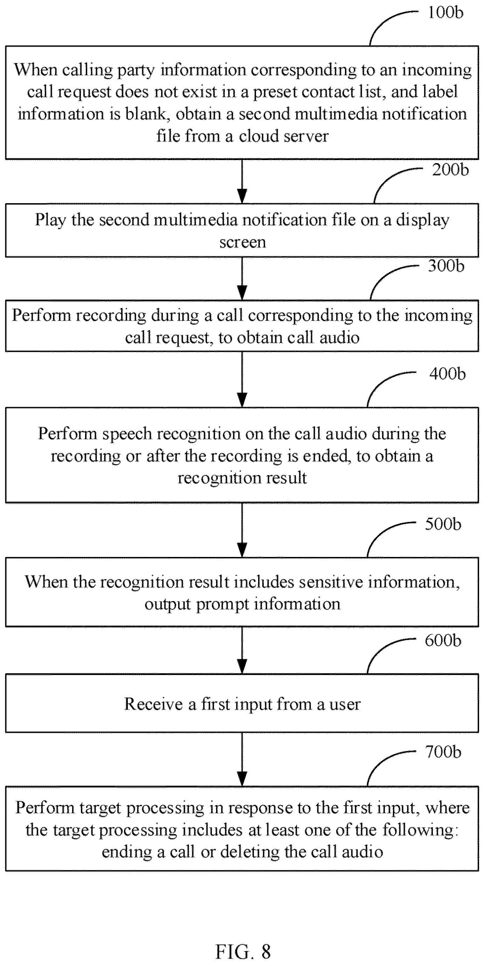

In another embodiment, as shown in FIG. 8, the called party may perform speech recognition on the call audio during the recording, to obtain the recognition result. When the recognition result includes the sensitive information, the prompt information is outputted to notify the user to be alert to fraud or an information leak. Similarly, the sensitive information may include information related to property safety of the user, such as a bank card number and a password, and account numbers and passwords of various financial platforms, for example, an online payment password.

Similarly, the prompt information may be text, voice, or video prompt information. For example, when recognizing that the recording process includes the sensitive information such as a bank card account number and a password, the called party sends a speech prompt of "The call is related to sensitive information. Please hang up in time." Alternatively, a speech prompt is accompanied by a bold text "The call is related to sensitive information. Please hang up in time." displayed on the display screen. Alternatively, a video "The call is related to sensitive information. Please hang up in time." is displayed on the display screen. Therefore, during the recording, when the call audio includes the sensitive information, the user is notified in time, thereby effectively reducing a risk of damage to property safety of the user.

Further, in some other feasible embodiments, as shown in FIG. 8, the incoming call notification method in this embodiment of this application further includes the following steps.

Step 600b: Receive a first input from the user.

Step 700b: Perform target processing in response to the first input, where the target processing includes at least one of the following: ending a call or deleting the call audio.

The called party receives the first input from the user. The target processing is performed in response to the first input. The first input includes an operation of the user performing clicking on the display screen, or an operation of the user pressing a volume button on the called party, or a gesture operation of the user on the display screen (for example, drawing a "C" on the display screen). The target processing includes at least one of the following: ending the call or deleting the call audio.

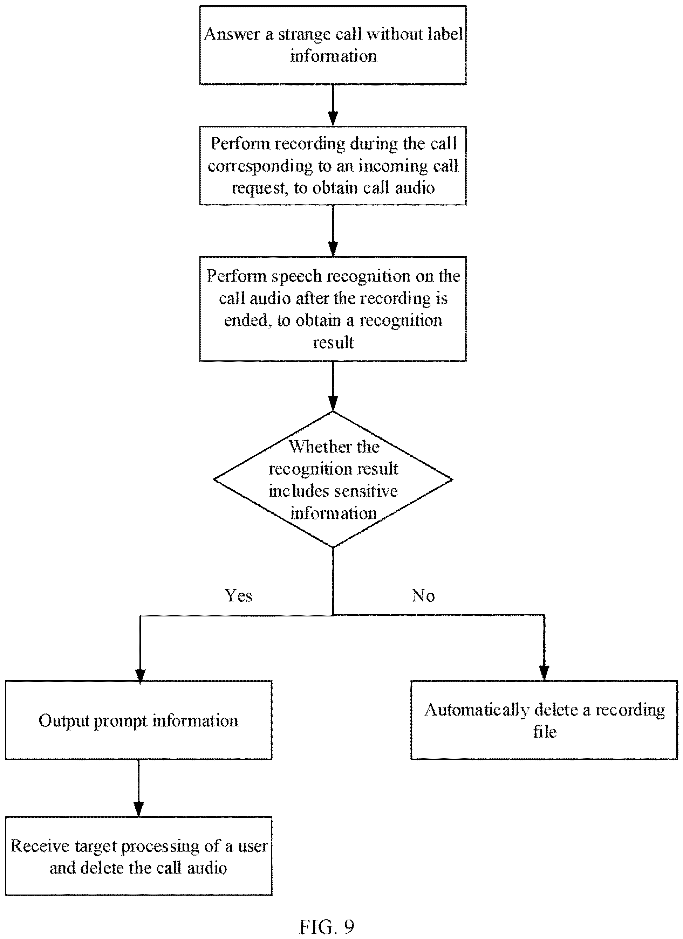

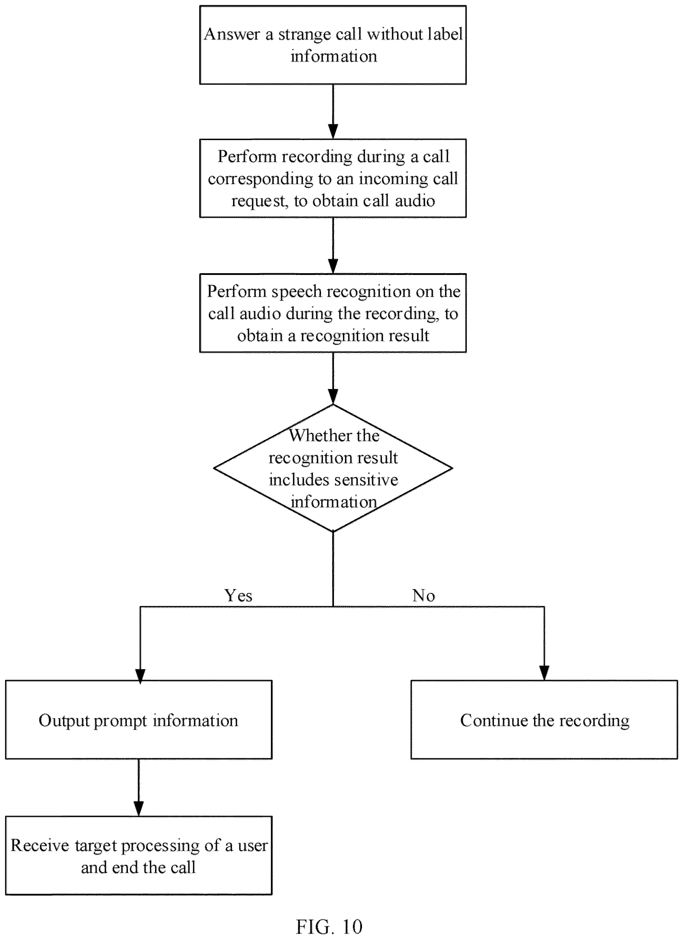

Specifically, as shown in FIG. 9 or FIG. 10, after the called party recognizes a sensitive word during the recording, and sends notification information, the user hears the notification information and chooses to end the call by touching a rejection key on the display screen. Alternatively, after the called party recognizes a sensitive word after the recording is ended, and sends notification information, the user hears the notification information and chooses to delete the call audio by touching a deletion key on the display screen. Therefore, when the received unlabeled incoming call includes the sensitive information, the user can end the call or delete the recording file in time, to prevent property safety of the user from being infringed or privacy of the user from being leaked.

It is worth mentioning that, after the recording is ended, it is detected that there is no sensitive word in the call audio. In this case, the called party can automatically delete the call audio. This is helpful to prevent a memory of the called party from being occupied by the call audio without sensitive word.

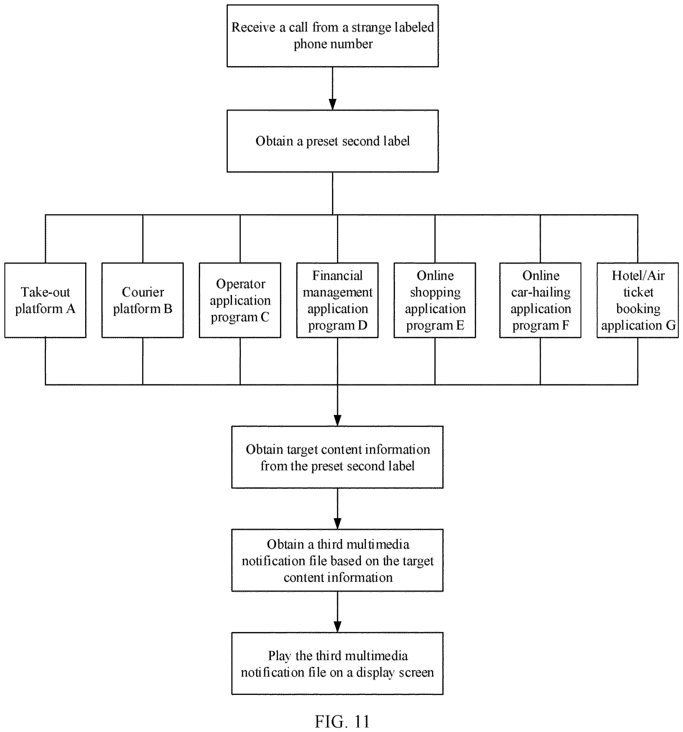

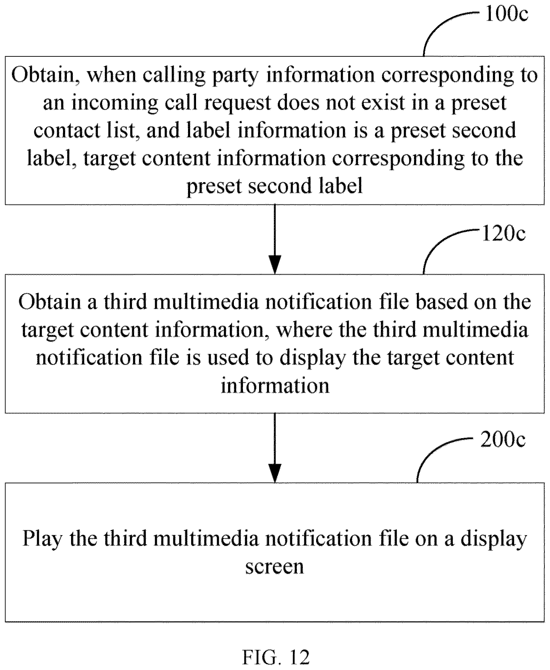

In some other feasible embodiments, as shown in FIG. 11 and FIG. 12, the step 100 of obtaining, when calling party information corresponding to an incoming call request does not exist in a preset contact list, a multimedia notification file based on label information corresponding to the calling party information includes the following step:
Step 100c: Obtain, when the calling party information corresponding to the incoming call request does not exist in the preset contact list, and the label information is a preset second label, target content information corresponding to the preset second label.

When the calling party information corresponding to the incoming call request does not exist in the preset contact list, and the label information is the preset second label, the called party obtains the target content information corresponding to the preset second label. The preset second label may include labels for various application programs, such as a label for a take-out platform A, a label for a courier platform B, a label for an operator application program C, a label for a financial management application program D, a label for an online shopping application program E, and a label for an online car-hailing application program F, and a label for a hotel/air ticket booking application G. The target content information is important information that is in a target application program corresponding to an application program label and that indicates an order type or an attribute of the target application program.

The step 100c of obtaining, when the calling party information corresponding to the incoming call request does not exist in the preset contact list, and the label information is a preset second label, target content information corresponding to the preset second label includes the following steps:
Step 110c: When the calling party information corresponding to the incoming call request does not exist in the preset contact list, and the label information is a take-out label or a courier label, obtain order information corresponding to the take-out label or the courier label.

The following uses the label for the take-out platform A, the label for the courier platform B, and the label for the operator application program C as examples for description.

In a typical embodiment, when the calling party information corresponding to the incoming call request does not exist in the preset contact list and the label information is the label for the take-out platform A, the called party obtains an application right of the take-out platform A, searches the take-out platform A for a take-out order closest to a current moment, and obtains a picture indicating take-out order information, such as a picture of the take-out order or a picture of a store of a merchant. Alternatively, in some other embodiments, the called party may obtain information, such as a picture of a platform coupon and a picture of a new merchant on the take-out platform A.

In another typical embodiment, when the calling party information corresponding to the incoming call request does not exist in the preset contact list and the label information is the label for the courier platform B, the called party obtains an application right of the courier platform B, and searches the courier platform B for an order to be received. There may be one or more orders to be received. The called party obtains a picture of the order to be received, a merchant picture corresponding to the order to be received, information of a courier services company and other pictures indicating the order to be received.

In another typical embodiment, when the calling party information corresponding to the incoming call request is not contact information corresponding to the called party, and the label information is the label for the operator application program C, the called party obtains an application right of the operator application program C, and searches the operator application program C for a picture of a package information of call costs and traffic of a current SIM card, a picture of an operator name, or the like. The package information of call costs and traffic includes a balance of current call costs, a balance of current traffic, and information such as a package of call costs and traffic.

Step 120c: Obtain a third multimedia notification file based on the target content information, where the third multimedia notification file is used to display the target content information.

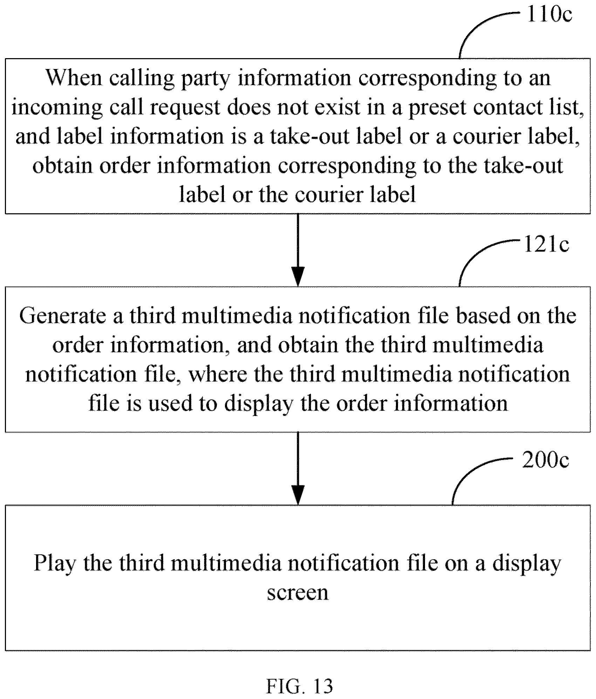

As shown in FIG. 13, when the label information is the take-out label or the courier label, the step 120c of obtaining a third multimedia notification file based on the target content information, where the third multimedia notification file is used to display the target content information includes the following step:
Step 121c: Generate the third multimedia notification file based on the order information, and obtain the third multimedia notification file, where the third multimedia notification file is used to display the order information.

The step 200 of playing the multimedia notification file on a display screen includes the following step:
Step 200c: Play the third multimedia notification file on the display screen.

When the target content information in step 100c is obtained, the called party obtains the third multimedia notification file based on the target content information. The third multimedia notification file is preferably a video color ring back tone. The target content information corresponding to the preset second label is obtained, the third multimedia notification file is obtained based on the target content information, and the third multimedia notification file is displayed on the display screen, to improve conspicuity of a call notification, reduce an incoming call recognition time, and improve incoming call recognition efficiency.

That the preset second label is the label A for the take-out platform is used as an example. When the calling party information corresponding to the incoming call request is not the contact information corresponding to the called party, and the label information is the label for the take-out platform A, the called party generates a video color ring back tone in a manner, for example, through a function of automatically generating an album video of a picture indicating take-out order information, such as a picture of a take-out order or a picture of a merchant storefront, so that the called party displays the video color ring back tone formed by the picture indicating the take-out order information, such as the picture of the take-out order or the picture of the merchant storefront. When seeing the video color ring back tone, the user can immediately learn that the incoming call is from the take-out platform A. Therefore, the user can answer the call quickly, to avoid missing the incoming call from the take-out platform A, reduce an incoming call recognition time, and improve conspicuity of a call notification and improve incoming call recognition efficiency.

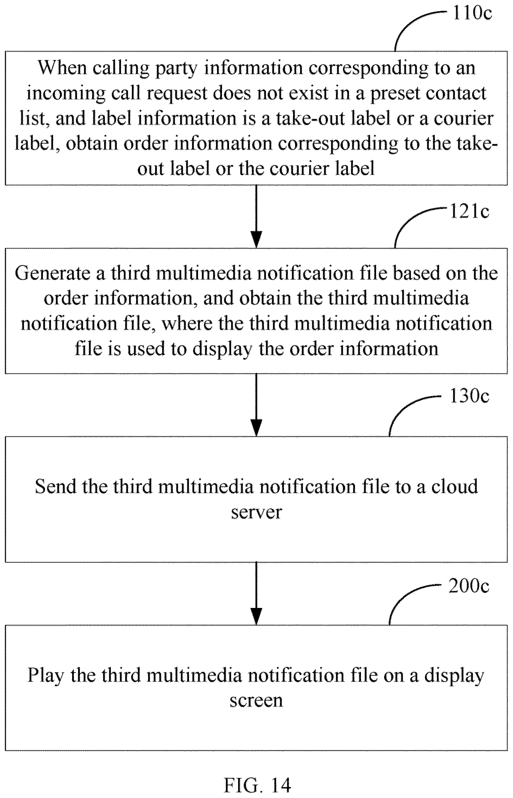

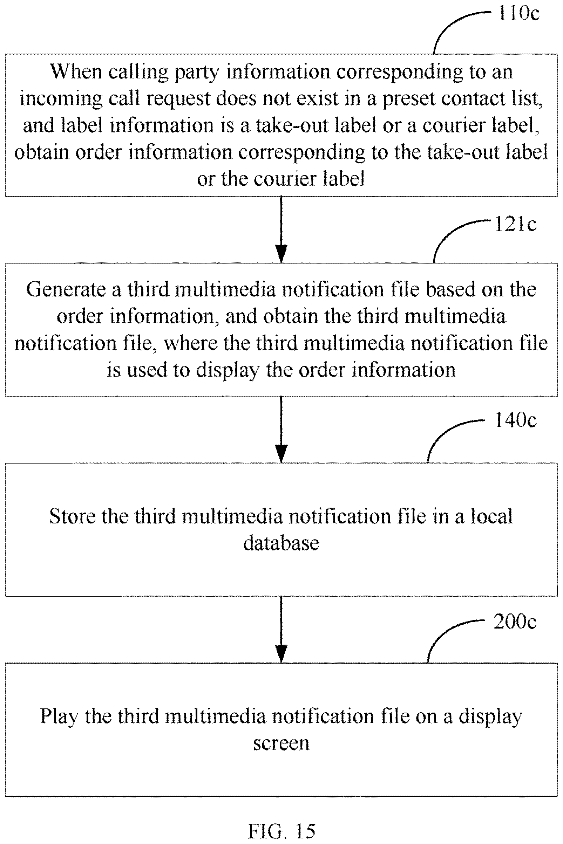

In some other feasible embodiments, as shown in FIG. 14 and FIG. 15, before the step 200c of playing the third multimedia notification file on a display screen, the method further includes any one or a combination of the following:
Step 130c: Send the third multimedia notification file to a cloud server.

After obtaining the third multimedia notification file obtained in step 110c, the called party can send the third multimedia notification file to the cloud server, and the cloud server stores the third multimedia notification file. When making a requirement, the called party obtains the third multimedia notification file from the cloud server. The cloud server stores the third multimedia notification file, thereby avoiding occupation of local storage space of the called party.

Step 140c: Store the third multimedia notification file in a local database.

In another embodiment, after the third multimedia notification file obtained in step 110c is obtained, the called party can store the third multimedia notification file in the local database. Therefore, the third multimedia notification file is stored in the local database. When making a requirement, the called party obtains the third multimedia notification file from the local database. The third multimedia notification file is stored in the local database, and there is no need to perform data communication with the cloud server, thereby simplifying a procedure of obtaining the third multimedia notification file, and improving efficiency of obtaining the third multimedia notification file.

It is worth mentioning that, after the step 100a of when the calling party information corresponding to the incoming call request does not exist in the preset contact list, and the label information is a preset first label, obtaining, from a cloud server, a first multimedia notification file corresponding to the preset first label, the called party may alternatively store the first multimedia notification file in the local database. The first multimedia notification file is stored in the local database, and there is no need to perform data communication with the cloud server, thereby simplifying a procedure of obtaining the first multimedia notification file, and improving efficiency of obtaining the first multimedia notification file.

Similarly, after the step 100b of when the calling party information corresponding to the incoming call request does not exist in the preset contact list, and the label information is blank, obtaining a second multimedia notification file from a cloud server, the called party may alternatively store the second multimedia notification file in the local database. The second multimedia notification file is stored in the local database, and there is no need to perform data communication with the cloud server, thereby simplifying a procedure of obtaining the second multimedia notification file, and improving efficiency of obtaining the second multimedia notification file.

The incoming call notification method provided in this embodiment of this application may be executed by an incoming call notification apparatus. In the embodiments of this application, the incoming call notification apparatus provided in the embodiment of this application is described by using an example in which the incoming call notification apparatus executes the incoming call notification method.

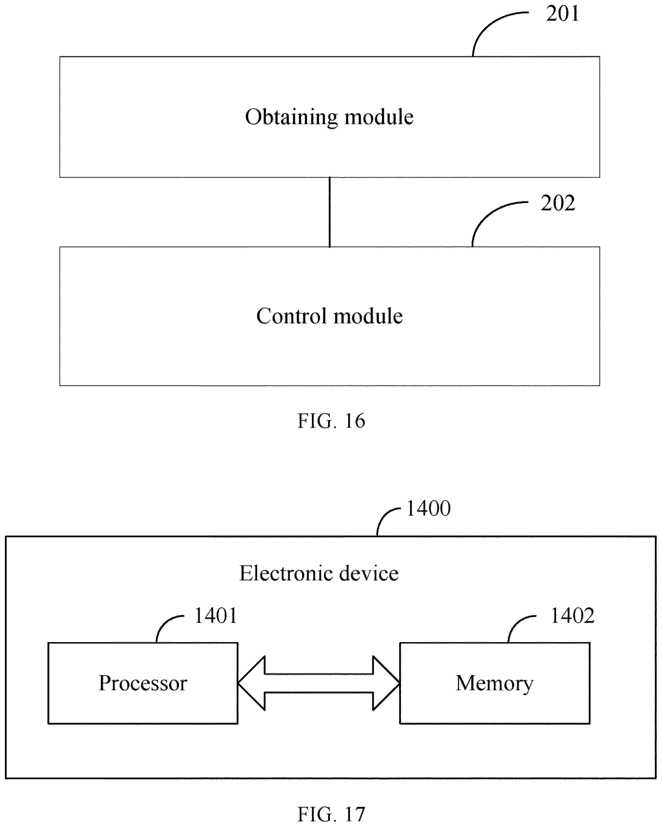

As shown in FIG. 16, the incoming call notification apparatus includes:
an obtaining module 201, configured to obtain, when calling party information corresponding to an incoming call request does not exist in a preset contact list, a multimedia notification file based on label information corresponding to the calling party information; and
a play module 202, configured to play the multimedia notification file on a display screen.

Based on the foregoing embodiments, in an optional embodiment, the obtaining module 201 includes:
a first obtaining submodule, configured to: when the calling party information corresponding to the incoming call request does not exist in the preset contact list, and the label information is a preset first label, obtain, from a cloud server, a first multimedia notification file corresponding to the preset first label.

Based on the foregoing embodiments, in an optional embodiment, the play module 202 includes:
a first play submodule, configured to play the first multimedia notification file in a first display area on the display screen.

Based on the foregoing embodiments, in an optional embodiment, the incoming call notification apparatus further includes:
a first display module, configured to display a call rejection control in a second display area on the display screen; and
a first receiving module, configured to end a call when a target input for the call rejection control is received.

Based on the foregoing embodiments, in an optional embodiment, the obtaining module 201 further includes:
a second obtaining submodule, configured to: when the calling party information corresponding to the incoming call request does not exist in the preset contact list, and the label information is blank, obtain a second multimedia notification file from a cloud server.

Based on the foregoing embodiments, in an optional embodiment, the incoming call notification apparatus further includes:
a recording module, configured to record content/voice of a call corresponding to the incoming call request, to obtain call audio;
a third obtaining submodule, configured to perform speech recognition on the call audio during the recording or after the recording is ended, to obtain a recognition result; and
a prompt module, configured to: when the recognition result includes sensitive information, output prompt information.

Based on the foregoing embodiments, in an optional embodiment, the incoming call notification apparatus further includes:
a second receiving module, configured to receive a first input from a user; and
an execution module, configured to perform target processing in response to the first input, where the target processing includes at least one of the following: ending a call or deleting the call audio.

Based on the foregoing embodiments, in an optional embodiment, the obtaining module 201 further includes:
a fourth obtaining submodule, configured to obtain, when the calling party information corresponding to the incoming call request does not exist in the preset contact list, and the label information is a preset second label, target content information corresponding to the preset second label; and
a fifth obtaining submodule, configured to obtain a third multimedia notification file based on the target content information, where the third multimedia notification file is used to display the target content information.

Based on the foregoing embodiments, in an optional embodiment, the fourth obtaining submodule is specifically configured to: when the calling party information corresponding to the incoming call request does not exist in the preset contact list, and the label information is a take-out label or a courier label, obtain order information corresponding to the take-out label or the courier label.

Based on the foregoing embodiments, in an optional embodiment, the fifth obtaining submodule is specifically configured to: generate a third multimedia notification file based on the order information, and obtain the third multimedia notification file, where the third multimedia notification file is used to display the order information.

Based on the foregoing embodiments, in an optional embodiment, the incoming call notification apparatus further includes:
a sending module, configured to send the third multimedia notification file to a cloud server; or
a storage module, configured to locally store the third multimedia notification file.

In this embodiment of this application, the incoming call notification apparatus notifies the user of a strange incoming call by playing a multimedia notification file (for example, a video color ring back tone) based on the label information of a calling party, so that the user can better learn an attribute of the incoming call, thereby enhancing notification conspicuity of the strange incoming call, improving a notification degree of an incoming call notification to the user, and improving call answering safety.

The incoming call notification apparatus in this embodiment of this application may be an electronic device, or may be a component such as a circuit or a chip in the electronic device. The electronic device may be a terminal, or another device other than the terminal. For example, the electronic device may be a mobile phone, a tablet computer, a notebook computer, a palmtop computer, an in-vehicle electronic device, a mobile Internet device (Mobile Internet Device, MID), an augmented reality (augmented reality, AR)/virtual reality (virtual reality, VR) device, a robot, a wearable device, an ultra-mobile personal computer (ultra-mobile personal computer, UMPC), a netbook, a personal digital assistant (personal digital assistant, PDA), or the like; and may further be a server, a network attached storage (Network Attached Storage, NAS), a personal computer (personal computer, PC), a television (television, TV), a teller machine, a self-service machine, or the like. This is not specifically limited in this embodiment of this application.

The incoming call notification apparatus in this embodiment of this application may be an apparatus with an operating system. The operating system may be an Android (Android) operating system, an iOS operating system, or another possible operating system, which is not specifically limited in this embodiment of this application.

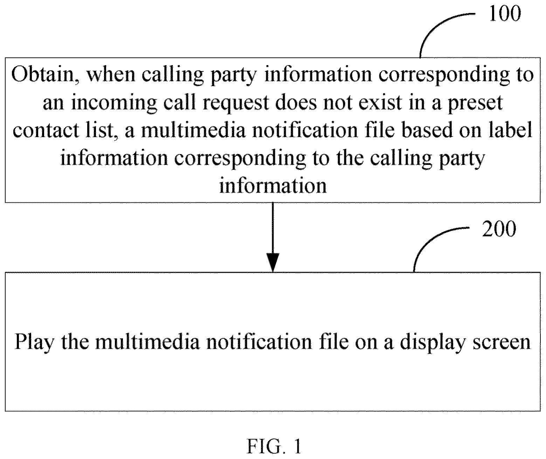

The incoming call notification apparatus provided in this embodiment of this application can implement the processes implemented in the method embodiments in FIG. 1 to FIG. 15. To avoid repetition, details are not described herein again.

Optionally, as shown in FIG. 17, an embodiment of this application further provides an electronic device 1400, including a processor 1401 and a memory 1402. The memory 1402 stores a program or instructions capable of running on the processor 1401. The program or the instructions are executed by the processor 1401 to implement the steps of the embodiment of the foregoing incoming call notification method and a same technical effect can be achieved. To avoid repetition, details are not described herein again.

It should be noted that the electronic device in this embodiment of this application includes the foregoing mobile electronic device and the foregoing non-mobile electronic device.

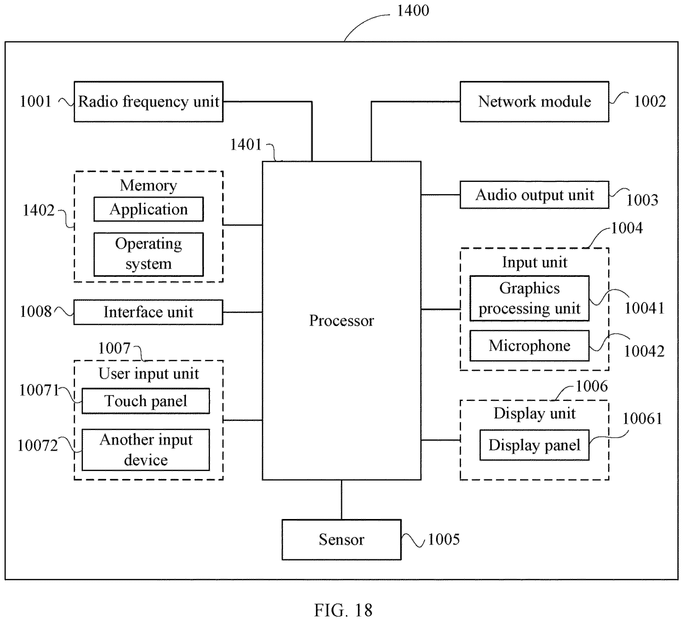

FIG. 18 is a schematic diagram of a hardware structure of an electronic device according to an embodiment of this application.

An electronic device 1400 includes but is not limited to components such as a radio frequency unit 1001, a network module 1002, an audio output unit 1003, an input unit 1004, a sensor 1005, a display unit 1006, a user input unit 1007, an interface unit 1008, a memory 1402, and a processor 1401.

A person skilled in the art can understand that the electronic device 1400 may further include a power supply (such as a battery) that supplies power to each component. The power supply may be logically connected to the processor 1401 by using a power supply management system, to implement functions such as charging and discharging management, and power consumption management by using the power supply management system. The structure of the electronic device shown in FIG. 18 does not constitute a limitation on the electronic device. The electronic device may include components more or fewer than those shown in the diagram, a combination of some components, or different component arrangements. Details are not described herein.

The processor 1401 is configured to obtain, when calling party information corresponding to an incoming call request does not exist in a preset contact list, a multimedia notification file based on label information corresponding to the calling party information.

The display unit 1006 is configured to play the multimedia notification file on a display screen.

In this embodiment of this application, the electronic device notifies a user of a strange incoming call by playing a multimedia notification file (for example, a video color ring back tone) based on the label information of a calling party, so that the user can better learn an attribute of the incoming call, thereby enhancing notification conspicuity of the strange incoming call, improving a notification degree of an incoming call notification to the user, and improving call answering safety.

Optionally, the processor 1401 is further configured to: when the calling party information corresponding to the incoming call request does not exist in the preset contact list, and the label information is a preset first label, obtain, from a cloud server, a first multimedia notification file corresponding to the preset first label.

When the user receives an incoming call with the fraud label, the first multimedia notification file extracted from the cloud server is displayed on a called party. The user sees, for example, the first multimedia notification file for fraud prevention, and is warned by the first multimedia notification file to hang up in time, to enhance conspicuity and warning of call notification. In this case, life and property safety of the user is ensured.

Optionally, the display unit 1006 is further configured to: display a call rejection control in a second display area on the display screen. The processor 1401 is further configured to end a call when a target input for the call rejection control is received.

Optionally, the processor 1401 is further configured to: when the calling party information corresponding to the incoming call request does not exist in the preset contact list, and the label information is blank, obtain a second multimedia notification file from a cloud server.

The called party obtains the second multimedia notification file from the cloud server, to display the second multimedia notification file on the display screen of the called party, to perform a notification of a strange incoming call and to be more alert to fraud or a privacy leak.

Optionally, the processor 1401 is further configured to: record content/voice of a call corresponding to the incoming call request, to obtain call audio; perform speech recognition on the call audio during the recording or after the recording is ended, to obtain a recognition result; and when the recognition result includes sensitive information, output prompt information.

After the recording is ended or during the recording, when the call audio includes the sensitive information, the user is notified in time, thereby effectively reducing a risk of damage to property safety of the user.

Optionally, the processor 1401 is further configured to: receive a first input from a user; and perform target processing in response to the first input, where the target processing includes at least one of the following: ending the call, or deleting the call audio.

The user chooses to delete the call audio by touching a deletion key on the display screen. Therefore, when the received unlabeled incoming call includes the sensitive information, the user can end the call or delete the call audio in time, to prevent property safety of the user from being infringed or privacy of the user from being leaked.

Optionally, the processor 1401 is configured to obtain, when the calling party information corresponding to the incoming call request does not exist in the preset contact list, and the label information is a preset second label, target content information corresponding to the preset second label; and obtain a third multimedia notification file based on the target content information, where the third multimedia notification file is used to display the target content information.

Specifically, the processor 1401 is configured to: when the calling party information corresponding to the incoming call request does not exist in the preset contact list, and the label information is a take-out label or a courier label, obtain order information corresponding to the take-out label or the courier label; and generate a third multimedia notification file based on the order information, and obtain the third multimedia notification file, where the third multimedia notification file is used to display the order information.

The target content information corresponding to the preset second label is obtained, the third multimedia notification file is obtained based on the target content information, and the third multimedia notification file is displayed on the display screen, to improve conspicuity of a call notification, reduce an incoming call recognition time, and improve incoming call recognition efficiency.

Optionally, the processor 1401 is configured to send the third multimedia notification file to a cloud server. The memory 1402 is configured to locally store the third multimedia notification file.

The cloud server stores the third multimedia notification file, thereby avoiding occupation of local storage space of the called party.

The third multimedia notification file is stored in the local database, and there is no need to perform data communication with the cloud server, thereby simplifying a procedure of obtaining the third multimedia notification file, and improving efficiency of obtaining the third multimedia notification file.

It should be understood that, in this embodiment of this application, the input unit 1004 may include a graphics processing unit (Graphics Processing Unit, GPU) 10041 and a microphone 10042, and the graphics processing unit 10041 processes image data of a static picture or a video obtained by an image capture apparatus (for example, a camera) in a video capture mode or an image capture mode. The display unit 1006 may include a display panel 10061. The display panel 10061 may be configured in a form such as a liquid crystal display or an organic light-emitting diode. The user input unit 1007 includes a touch panel 10071 and another input device 10072. The touch panel 10071 is also referred to as a touchscreen. The touch panel 10071 may include two parts: a touch detection apparatus and a touch controller. The another input device 10072 may include but is not limited to a physical keyboard, a functional button (such as a volume control button or a power on/off button), a trackball, a mouse, and a joystick. Details are not described herein. The memory 1402 may be configured to store a software program and various data, including but not limited to an application program and an operating system. An application processor and a modem processor may be integrated into the processor 1401, the application processor mainly processes an operating system, a user interface, an application program, and the like, and the modem processor mainly processes wireless communication. It may be understood that, alternatively, the modem processor may not be integrated into the processor 1401.

An embodiment of this application further provides a readable storage medium. The readable storage medium stores a program or instructions. When the program or the instructions are executed by a processor, the processes of the embodiment of the incoming call notification method are implemented, and a same technical effect can be achieved. To avoid repetition, details are not described herein again.

The processor is a processor in the electronic device in the foregoing embodiment. The readable storage medium includes a computer-readable storage medium, such as a computer read-only memory ROM, a random access memory RAM, a magnetic disk, or an optical disc.

An embodiment of this application further provides a chip. The chip includes a processor and a communications interface, the communications interface is coupled to the processor, and the processor is configured to run a program or instructions to implement the processes of the foregoing embodiment of the incoming call notification method, and a same technical effect can be achieved. To avoid repetition, details are not described herein again.

It should be understood that the chip mentioned in this embodiment of this application may also be referred to as a system-level chip, a system chip, a chip system, or an on-chip system chip.

An embodiment of this application provides another computer program product. The program product is stored in a storage medium, and the program product is executed by at least one processor to implement the incoming call notification method.

It should be noted that in this specification, the term "include", "including", or any other variant is intended to cover non-exclusive inclusion, so that a process, method, article, or apparatus that includes a series of elements includes not only those elements but also other elements that are not explicitly listed, or includes elements inherent to such a process, method, article, or apparatus. An element limited by "includes a ..." does not, without more constraints, preclude the presence of additional identical elements in the process, method, article, or apparatus that includes the element. In addition, it should be noted that the scope of the method and the apparatus in the implementations of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a computer software product. The computer software product is stored in a storage medium (such as a ROM/RAM, a hard disk, or an optical disc), and includes several instructions for instructing a terminal (which may be mobile phone, a computer, a server, a network device, or the like) to perform the methods described in the embodiments of this application.

The embodiments of this application are described above with reference to the accompanying drawings, but this application is not limited to the foregoing specific implementations, and the foregoing specific implementations are only illustrative and not restrictive. Under the enlightenment of this application, a person of ordinary skill in the art can make many forms without departing from the purpose of this application and the protection scope of the claims, all of which fall within the protection of this application.

## Claims

1. An incoming call notification method, wherein the incoming call notification method comprises:
obtaining, when calling party information corresponding to an incoming call request does not exist in a preset contact list, a multimedia notification file based on label information corresponding to the calling party information; and
playing the multimedia notification file on a display screen.

2. The incoming call notification method according to claim 1, wherein the obtaining, when calling party information corresponding to an incoming call request does not exist in a preset contact list, a multimedia notification file based on label information corresponding to the calling party information comprises:
when the calling party information corresponding to the incoming call request does not exist in the preset contact list, and the label information is a preset first label, obtaining, from a cloud server, a first multimedia notification file corresponding to the preset first label; and
the playing the multimedia notification file on a display screen comprises:
playing the first multimedia notification file in a first display area on the display screen.

3. The incoming call notification method according to claim 2, after the playing the first multimedia notification file in a first display area on the display screen, further comprising:
displaying a call rejection control in a second display area on the display screen; and
ending a call when a target input for the call rejection control is received.

4. The incoming call notification method according to claim 1, wherein the obtaining, when calling party information corresponding to an incoming call request does not exist in a preset contact list, a multimedia notification file based on label information corresponding to the calling party information comprises:
when the calling party information corresponding to the incoming call request does not exist in the preset contact list, and the label information is blank, obtaining a second multimedia notification file from a cloud server.

5. The incoming call notification method according to claim 4, wherein the incoming call notification method further comprises:
recording content/voice of a call corresponding to the incoming call request, to obtain call audio;
performing speech recognition on the call audio during the recording or after the recording is ended, to obtain a recognition result; and
when the recognition result comprises sensitive information, outputting prompt information.

6. The incoming call notification method according to claim 5, wherein the incoming call notification method further comprises:
receiving a first input from a user; and
performing target processing in response to the first input, wherein
the target processing comprises at least one of the following: ending a call or deleting the call audio.

7. The incoming call notification method according to claim 1, wherein the obtaining, when calling party information corresponding to an incoming call request does not exist in a preset contact list, a multimedia notification file based on label information corresponding to the calling party information comprises:
obtaining, when the calling party information corresponding to the incoming call request does not exist in the preset contact list, and the label information is a preset second label, target content information corresponding to the preset second label; and
obtaining a third multimedia notification file based on the target content information, wherein the third multimedia notification file is used to display the target content information.

8. The incoming call notification method according to claim 7, wherein the obtaining, when the calling party information corresponding to the incoming call request does not exist in the preset contact list, and the label information is a preset second label, target content information corresponding to the preset second label comprises:
when the calling party information corresponding to the incoming call request does not exist in the preset contact list, and the label information is a take-out label or a courier label, obtaining order information corresponding to the take-out label or the courier label; and
the obtaining a third multimedia notification file based on the target content information comprises:
generating a third multimedia notification file based on the order information, and obtaining the third multimedia notification file, wherein the third multimedia notification file is used to display the order information.

9. The incoming call notification method according to claim 8, wherein the incoming call notification method further comprises any one of the following:
sending the third multimedia notification file to a cloud server; or
locally storing the third multimedia notification file.

10. An incoming call notification apparatus, comprising:
an obtaining module, configured to obtain, when calling party information corresponding to an incoming call request does not exist in a preset contact list, a multimedia notification file based on label information corresponding to the calling party information; and
a play module, configured to play the multimedia notification file on a display screen.

11. The incoming call notification apparatus according to claim 10, wherein the obtaining module 201 comprises:
a first obtaining submodule, configured to: when the calling party information corresponding to the incoming call request does not exist in the preset contact list, and the label information is a preset first label, obtain, from a cloud server, a first multimedia notification file corresponding to the preset first label; and
the play module comprises:
a first play submodule, configured to play the first multimedia notification file in a first display area on the display screen.

12. The incoming call notification apparatus according to claim 11, wherein the incoming call notification apparatus further comprises:
a first display module, configured to display a call rejection control in a second display area on the display screen; and
a first receiving module, configured to end a call when a target input for the call rejection control is received.

13. The incoming call notification apparatus according to claim 10, wherein the obtaining module further comprises:
a second obtaining submodule, configured to: when the calling party information corresponding to the incoming call request does not exist in the preset contact list, and the label information is blank, obtain a second multimedia notification file from a cloud server.

14. The incoming call notification apparatus according to claim 13, wherein the incoming call notification apparatus further comprises:
a recording module, configured to record content/voice of a call corresponding to the incoming call request, to obtain call audio;
a third obtaining submodule, configured to perform speech recognition on the call audio during the recording or after the recording is ended, to obtain a recognition result; and
a prompt module, configured to: when the recognition result comprises sensitive information, output prompt information.

15. The incoming call notification apparatus according to claim 14, wherein the incoming call notification apparatus further comprises:
a second receiving module, configured to receive a first input from a user; and
an execution module, configured to perform target processing in response to the first input, wherein
the target processing comprises at least one of the following: ending a call or deleting the call audio.

16. The incoming call notification apparatus according to claim 10, wherein the obtaining module further comprises:
a fourth obtaining submodule, configured to obtain, when the calling party information corresponding to the incoming call request does not exist in the preset contact list, and the label information is a preset second label, target content information corresponding to the preset second label; and
a fifth obtaining submodule, configured to obtain a third multimedia notification file based on the target content information, wherein the third multimedia notification file is used to display the target content information.

17. The incoming call notification apparatus according to claim 16, wherein the fourth obtaining submodule is specifically configured to: when the calling party information corresponding to the incoming call request does not exist in the preset contact list, and the label information is a take-out label or a courier label, obtain order information corresponding to the take-out label or the courier label; and
the fifth obtaining submodule is specifically configured to: generate a third multimedia notification file based on the order information, and obtain the third multimedia notification file, wherein the third multimedia notification file is used to display the order information.

18. The incoming call notification apparatus according to claim 17, wherein the incoming call notification apparatus further comprises any one of the following:
a sending module, configured to send the third multimedia notification file to a cloud server; or
a storage module, configured to locally store the third multimedia notification file.

19. An electronic device, comprising a processor, a memory, and a program or instructions stored in the memory and capable of running on the processor, wherein when the program or the instructions are executed by the processor, the steps of the incoming call notification method according to any one of claims 1 to 9 are implemented.

20. A readable storage medium, wherein the readable storage medium stores a program or instructions, and when the program or the instructions are executed by a processor, the steps of the incoming call notification method according to any one of claims 1 to 9 are implemented.

21. A chip, wherein the chip comprises a processor and a communications interface, the communications interface is coupled to the processor, and the processor is configured to run a program or instructions to implement the steps of the incoming call notification method according to any one of claims 1 to 9.

22. A computer program product, wherein the program product is executed by at least one processor to implement the steps of the incoming call notification method according to any one of claims 1 to 9.

23. An incoming call notification apparatus, wherein the apparatus is configured to perform the steps of the incoming call notification method according to any one of claims 1 to 9.
